# EUROPÄISCHE PATENTSCHRIFT

(11) **EP 3 620 220 B1**
(45) Veröffentlichungstag und Bekanntmachung des Hinweises auf die Patenterteilung: **12.02.2025**
(21) Anmeldenummer: 19193977.6
(22) Anmeldetag: 28.08.2019
(51) Int. Cl.: F01N 3/20, F01N 13/00, F16L 41/02, B01D 35/31, B01D 29/90, B01D 29/15

(54) **FILTERVORRICHTUNG**
FILTER DEVICE
DISPOSITIF FILTRANT

(30) Priorität: 05.09.2018 DE 102018007005
(43) Veröffentlichungstag der Anmeldung: 11.03.2020
(73) Patentinhaber: Hydac Filtertechnik GmbH, 66280 Sulzbach/Saar (DE)
(72) Erfinder: Sakraschinsky, Michael, 66386 St. Ingbert (DE); Hennes, Stefan, 66540 Hangard (DE); Fiedler, Sebastian, 66583 Spiesen-Elversberg (DE)
(74) Vertreter: Bartels und Partner, Patentanwälte

(56) Entgegenhaltungen:
- WO-A1-2017/025161
- DE-A1- 102012 223 028
- US-A- 2 886 180
- US-A- 3 272 336
- US-A1- 2018 195 475

## Beschreibung

Die Erfindung betrifft ein Filterelement mit den Merkmalen im Oberbegriff von Anspruch 1. Die Erfindung betrifft ferner eine Filtervorrichtung, mit einem solchen Filterelement.

In vielen Fluidsystemen, in denen Filtervorrichtungen eingesetzt werden, kommt es zu diskontinuierlichen Druckbeaufschlagungen des betreffenden Fluids, wie eines Treibstoffes, eines Schmiermittels oder eines Betriebsmittels für ein Anwendungssystem. Durch das Auftreten unerwünschter Druckpulsationen kann es infolge der Pulsationsbelastung zu Materialermüdungen von Systemkomponenten kommen, wie auch zur Beeinträchtigung der Dosiergenauigkeit bei einer Dosierung eines betreffenden Fluids mit einem Dosierventil, verbunden mit einer Beeinträchtigung der Sprayqualität des zu dosierenden Fluids. Um dem entgegenzuwirken, ist es Stand der Technik, bei Filtervorrichtungen, die in mit Druckpulsationen belasteten Fluidsystemen eingesetzt sind, eine Pulsationen dämpfende Kompensatoreinrichtung vorzusehen.

Die DE 10 2012 223 028 A1 offenbart eine Filtervorrichtung der eingangs genannten Gattung, die zum Einsatz bei einer Nachbehandlungseinrichtung für Abgase einer Brennkraftmaschine vorgesehen ist. Bei einer solchen Einrichtung, bei der wässrige Harnstofflösung, wie sie unter dem Markennamen AdBlue^{®} erhältlich ist, in dosierten Mengen in den Abgasstrom eingespritzt wird, um im Abgas enthaltene Stickoxyde zu Stickstoff und Wasser zu reduzieren, treten Druckpulsationen besonders störend in Erscheinung. Als Kompensationselement ist bei der aus dem genannten Dokument bekannten Lösung eine geschlossene, aus einem Elastomer bestehende Schutzhülle vorgesehen, die zur Glättung von Druckschwankungen gegen die Kraft einer Federanordnung verformbar ist. Mit der durch die Federanordnung zur Verfügung gestellten Nachgiebigkeit wirkt die Hülle auch als Kompensator zur Verringerung des Eisdruckes, der sich im Falle des Gefrierens der wässrigen Harnstofflösung in der Filtervorrichtung aufbaut und durch übermäßige Druckbelastung zu Schäden am Filterelement führt.

Die EP 0 881 396 A2 beschreibt ein Filterelement, das ein sich zwischen zwei Kappenteilen erstreckendes Elementmaterial aufweist, das sich innenumfangsseitig gegen eine fluiddurchlässige Stützeinrichtung abstützt, wobei im Inneren der Stützeinrichtung eine Kompensatoreinrichtung angeordnet ist.

Weitere Filterelemente gehen aus der EP 2 441 968 A1, der EP 1 041 327 A2, der US 6 213 153 B1, der EP 1 222 402 A0 bzw. der WO 01/29431 A1 und der US 2018/0195475 A1 hervor.

Ausgehend von diesem Stand der Technik stellt sich die Erfindung die Aufgabe, ein Filterelement und eine Filtervorrichtung der betrachteten Gattung zur Verfügung zu stellen, die sich bei besonders einfachem Aufbau durch ein besonders sicheres Betriebsverhalten auszeichnen.

Erfindungsgemäß ist diese Aufgabe durch ein Filterelement gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass ein Kappenteil einstückiger Bestandteil der Kompensatoreinrichtung ist.

In einer bevorzugten Ausführungsform ist vorgesehen, dass das Filterelement außenumfangsseitig und mit einem vorgebbaren radialen Abstand unter Bildung eines Fluidraums von einem Mantel umgeben ist, der wiederum mit einem vorgebbaren radialen Abstand unter Bildung eines weiteren Fluidraums von dem Filtergehäuse umgeben ist, und dass die beiden Fluidräume in Form kommunizierender Röhren fluidführend miteinander verbunden sind. Diese Gestaltung eines das Filterelement umgebenden Innenmantels führt im Gefrierfalle zu einer wesentlichen Verringerung des auf das Filterelement einwirkenden Gefrierdrucks. Bei der Anordnung der Fluidräume in der Art kommunizierender Röhren, wobei die Fluidräume lediglich an einem Ende des Innenmantels fluidführend miteinander verbunden sind, wirkt im Gefrierfall lediglich der Gefrierdruck des Fluidvolumens des inneren Fluidraums schädigend auf das Filterelement ein, während der Gefrierdruck des Fluidvolumens im äußeren Fluidraum lediglich zwischen Mantelaußenseite und Innenwand des Filtergehäuses wirksam ist. Bei baulich klein ausgebildetem Volumen des inneren Fluidraums sind daher Gefrierschäden weitestgehend vermeidbar. Ein weiterer Vorteil des Innenmantels besteht in der Bildung eines Anströmschutzes für das Filterelement, weil bei Zustrom des Unfiltrats zum außenliegenden Fluidraum der Mantel mit seiner Außenseite eine Prallfläche für die Unfiltratströmung bildet.

Mit Vorteil ist die Anordnung so getroffen, dass die kommunizierenden Röhren koaxial zur Längsachse des Filterelements angeordnet sind und einen zylindrischen Aufbau haben.

Bei vorteilhaften Ausführungsbeispielen weist das Filterelement das sich zwischen zwei Kappenteilen erstreckende Elementmaterial auf, dessen Unfiltrat- oder Einströmseite in den einen Fluidraum ausmündet und dessen Filtrat- oder Abströmseite in Richtung der Kompensatoreinrichtung weist.

Das Elementmaterial ist als Hohlzylinder mit einer Vielzahl von Filterfasern ausgebildet und zumindest teilweise luftundurchlässig, vorzugsweise im Wesentlichen luftundurchlässig und besonders bevorzugt vollständig luftundurchlässig, ausgeführt.

Mit besonderem Vorteil kann die Anordnung so getroffen sein, dass das eine, insbesondere obere Kappenteil einstückiger Bestandteil des Mantels ist und dass das andere, insbesondere untere oder fußseitige Kappenteil einstückiger Bestandteil der Kompensatoreinrichtung ist.

Zum Herstellen der fluidführenden Verbindung zwischen den beiden kommunizierenden Röhren weist bei vorteilhaften Ausführungsbeispielen der Mantel in seinem fußseitigen Bereich mindestens eine Fluid-Durchlassstelle auf.

Für einen wirksamen Schutz des Elementmaterials gegen Strömungskräfte ist zwischen dem Filterelement und der Kompensatoreinrichtung eine Stützeinrichtung angeordnet, an der sich das Elementmaterial bei einer Durchströmung mit Fluid von außen nach innen abstützt.

Für den fluiddichten Abschluss des einen Fluidraums der kommunizierenden Röhren, der sich an der Außenseite des Mantels befindet, sind die beiden Kappenteile gegenüber dem Filtergehäuse mittels einer Dichteinrichtung abgedichtet.

Hinsichtlich der Ausbildung der Kompensatoreinrichtung ist die Anordnung mit Vorteil so getroffen, dass die Kompensatoreinrichtung über einen dünnwandigen Hohlkörper verfügt, der vorzugsweise aus einem Kunststoffmaterial gebildet ist. Die dünne Wand des Hohlkörpers bildet hierbei eine Art Membran, die zur Dämpfung von Pulsationen reversibel verformbar ist.

Mit Vorteil kann die Anordnung hierbei so getroffen sein, dass das obere Kappenteil des Filterelements unter Bildung mindestens einer weiteren Fluid-Durchlassstelle von dem Hohlkörper endseitig durchgriffen ist, der mit einem vorgebbaren Überstand axial über das obere Kappenteil vorsteht und in diesem Bereich vom oberen Kappenteil in seiner Einbaulage fixiert ist.

Die fluiddurchlässige Stützeinrichtung kann mit Vorteil aus einem Stützrohr gebildet sein, das sich zwischen den beiden Kappenteilen erstreckt und den Hohlkörper radial umfasst.

Bei einer besonders vorteilhaften Ausgestaltung weist das Filtergehäuse einen Einlass für Unfiltrat, insbesondere in Form einer partikelverunreinigten Harnstoff-Wasserstoff-Lösung auf, die, vom Elementmaterial in einer Fluidrichtung von außen nach innen von den Partikel abgereinigt, über einen Auslass aus dem Filtergehäuse abführbar ist, wobei in Gegenrichtung über den Auslass zugeführte Luft unter Umgehung des Elementmaterials das im Filtergehäuse verbliebene Unfiltrat zumindest teilweise in Richtung des Einlasses des Filtergehäuses ausbläst. Durch die im Abstellfall so ermöglichte, weitgehende Entleerung des Filtergehäuses ist die erfindungsgemäße Filtervorrichtung gegen Beschädigung durch Gefrierdruck besonders wirksam geschützt.

Für eine besonders sichere Durchführung des Vorgangs der Entleerung kann die Anordnung mit Vorteil so getroffen sein, dass das obere Kappenteil mit einem weiteren Elementmaterial versehen ist, das Partikel aus einem Luftstrom ausfiltert und auf seiner Reinseite mit dem Fluidraum zwischen Mantel und dem einen Elementmaterial verbunden ist. Dadurch ist die Gefahr des Eintrags von Verschmutzungen über den zum Ausblasen genutzten Luftstrom vermieden. Mit Vorteil kann hierbei ein hydrophobes Elementmaterial vorgesehen sein, das im normalen Filtrationsbetrieb einen Übertritt von Unfiltrat verhindert.

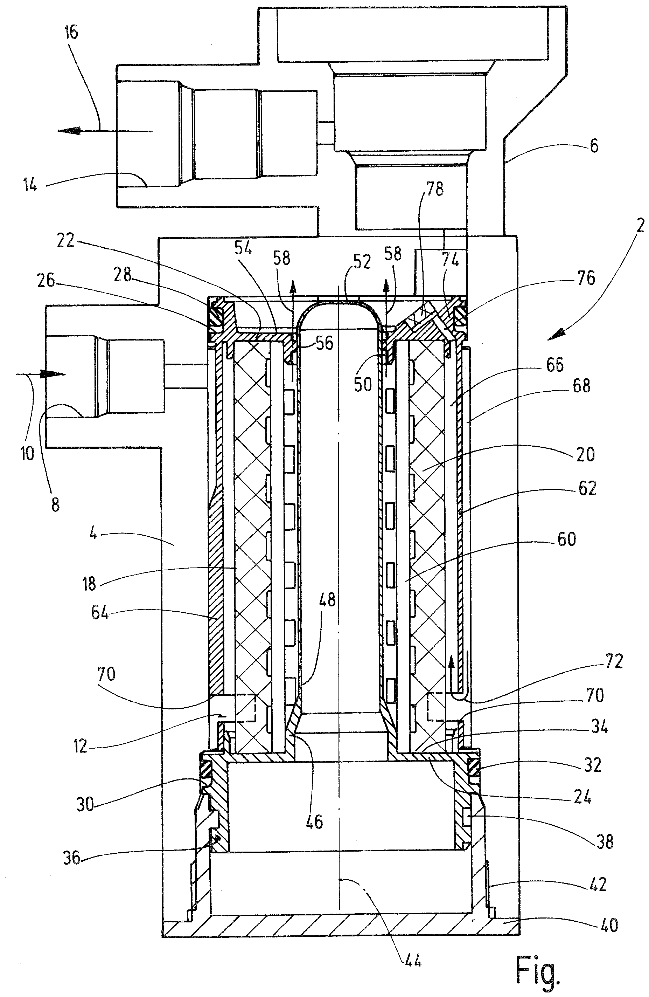

Nachstehend ist die Erfindung anhand eines in der Zeichnung dargestellten Ausführungsbeispiels im Einzelnen erläutert.

In der einzigen Figur sind das Filterelement des Ausführungsbeispiels der Filtervorrichtung im Längsschnitt und das dazugehörige Filtergehäuse in einem schematisch vereinfachten Längsschnitt dargestellt.

Das Filtergehäuse 2 weist ein kreiszylinderförmiges Hauptteil 4 und ein sich an dieses anschließendes oberes Kopfteil 6 auf. Am Hauptteil 4 befindet sich in der Nähe des Übergangs zum Kopfteil 6 ein seitlicher Einlass 8, über den, wie mit einem Strömungspfeil 10 angedeutet ist, Unfiltrat in den kreiszylinderförmigen Innenraum 12 des Hauptteils 4 einströmbar ist. Am Kopfteil 6 befindet sich in ebenfalls seitlicher Anordnung ein Auslass 14, über den im Betrieb, wie mit Strömungspfeil 16 angedeutet ist, Filtrat ausströmt. Bei der vereinfachten Darstellung des Kopfteils 6 ist die Fluidverbindung zwischen Auslass 14 und dem Hauptteil 4 nicht näher dargestellt.

Das im kreiszylindrischen Innenraum 12 des Hauptteils 4 aufgenommene Filterelement 18 weist ein Elementmaterial 20 in Form eines kreiszylindrischen Hohlkörpers auf, der zwischen einem dem Kopfteil 6 zugewandten, oberen Kappenteil 22 und einem unteren Kappenteil 24 aufgenommen ist. Das obere Kappenteil 22 weist am Außenumfang eine Ringnut 26 auf, in der ein O-Ring 28 sitzt, der das Kappenteil 22 gegen das Gehäusehauptteil 4 abdichtet. In entsprechender Weise ist am unteren Kappenteil 24 eine Ringnut 30 für einen O-Ring 32 gebildet, der die Abdichtung des unteren Kappenteils 24 am Gehäusehauptteil 4 bildet. Für die Festlegung des Filterelements 18 in der in der Figur gezeigten Einbauposition weist das untere Kappenteil 24, das aus einem Kunststoffmaterial einstückig spritzgegossen ist, im Anschluss an eine Ringfläche 34, die die Anlagefläche für das stirnseitige Ende des Hohlkörpers des Elementmaterials 20 bildet, einen zur Gehäuselängsachse koaxialen, nach unten vorstehenden Ansatz 36 in Form eines Hohlzylinders auf, der über ein Steilgewinde 38 mit einem Deckel 40 verbunden ist, der den bodenseitigen Abschluss des Gehäusehauptteils 4 bildet und an diesem mittels einer Verschraubung 42 festlegbar ist. Die Ringfläche 34 des Kappenteils 24 ist radial innenliegend durch einen zur Gehäuselängsachse 44 konzentrischen Stutzen 46 begrenzt, der in einen sich nach oben anschließenden Hohlkörper 48 übergeht. Dieser ist dünnwandig ausgebildet, so dass er eine nachgiebige Membran bildet. Mit seinem oberen, geschlossenen Endbereich durchgreift der Hohlkörper 48 eine zentrale Öffnung 50 im oberen Kappenteil 22, wobei das obere Ende 52 des Hohlkörpers 48 im Bereich einer muldenartigen Vertiefung 54 des Kappenteils 22 über die Öffnung 50 nach oben hin vorsteht. Die Öffnung 50 weist innenseitig einzelne radial nach innen vorstehende Vorsprünge 56 auf. Beim Filtrationsbetrieb, bei dem das Elementmaterial 20 des Filterelements 18 von außen nach innen hin durchströmt ist, sind daher zwischen der Öffnung 50 und der Membran des Hohlkörpers 48 Durchlassstellen gebildet, über die, wie mit Strömungspfeilen 58 angedeutet, Filtrat zum Kopfteil 6 und zum Filtratauslass 14 gelangt. Bei der Durchströmung von außen nach innen ist das Elementmaterial durch ein fluiddurchlässiges Stützrohr 60, das den Hohlkörper 48 umgibt, abgestützt.

Das obere Kappenteil 22 weist einen einstückig angeformten Mantel 62 auf, der, mit Ausnahme eines verdickten Mantelteils 64, die Form eines kreiszylindrischen Hohlkörpers besitzt. Außen- und Innendurchmesser des Mantels 62 sind so bemessen, dass zwischen der Außenseite des Elementmaterials 20 und der Innenseite des Mantels 62 ein erster Fluidraum 66 und zwischen der Außenseite des Mantels 62 und dem Gehäusehauptteil 4 ein zweiter, äußerer Fluidraum 68 gebildet ist. Zur Bildung einer fluidführenden Verbindung zwischen den Fluidräumen 66 und 68 sind im fußseitigen Endbereich des Mantels 62 Wandöffnungen 70 im Mantel 62 ausgebildet.

Bei dieser Anordnung und Fluidverbindung bilden die beiden Fluidräume 66, 68 eine Art kommunizierender Röhren, die, mit Ausnahme des verdickten Mantelteils 64, mit dem der Mantel 62 an der Gehäuseinnenseite anliegt, einen zur Längsachse 44 koaxialen, zylindrischen Aufbau besitzen. Beim Betrieb, bei dem das Unfiltrat über den Einlass 8 in den äußeren Fluidraum 68 einströmt, bildet der Mantel 62 die Anströmfläche, so dass die Außenseite des Elementmaterials 20 bei Druckpulsationen keiner radial wirkenden Strömungs-Druckbelastung ausgesetzt ist, sondern das Unfiltrat, wie mit Strömungspfeil 72 angedeutet, im inneren Fluidraum 66 in Axialrichtung strömt. Mit der membranartigen dünnen Wand bildet der Hohlkörper 48 eine die Pulsationen glättende Kompensatoreinrichtung. Hierfür kann der vom bodenseitigen Deckel 40 geschlossene Innenraum des Hohlkörpers 48 ein kompressibles Medium, wie Luft oder N₂, enthalten. Zur Einstellung der gewünschten Dämpfungscharakteristik kann der Innenraum hierbei drucklos oder mit einem, beispielsweise geringen, Fülldruck versehen sein.

Dank der speziellen Gestaltung der Fluidräume 66, 68 ist die erfindungsgemäße Vorrichtung weitgehend gefriersicher, da im Fluidraum 66 lediglich ein geringes, auf das Elementmaterial 20 im Gefrierfall mit Gefrierdruck einwirkendes Fluidvolumen eingeschlossen ist, während ein sich im äußeren Fluidraum 68 entwickelnder Gefrierdruck vom Mantel 62 aufgenommen ist. Für einen zusätzlichen Gefrierschutz bietet die erfindungsgemäße Vorrichtung die Möglichkeit, im Abstellfall der Vorrichtung das in den Fluidräumen 66, 68 befindliche Unfiltrat über den Fluideinlass 8 auszublasen. Hierfür ist in einem Wandteil 74 der muldenartigen Vertiefung 54 des oberen Kappenteils 22 ein Durchgang 76 ausgebildet, der von der die Filtratseite bildenden Oberseite des Kappenteils 22 zum Fluidraum 66 führt. Im Durchgang 76 befindet sich ein Partikelfilter 78, dessen Filtermaterial hydrophob ist, so dass kein Durchtritt von Unfiltrat aus dem Fluidraum 66 über den Durchgang 76 möglich ist, jedoch der Durchstrom von Blasluft von der Filtratseite her über den Ausgang 76 ermöglicht ist. Im Abstellfall der Vorrichtung kann daher durch Zufuhr von Druckluft vom Filtratauslass 14 her sowohl das Fluidvolumen im ersten Fluidraum 66 als auch im zweiten Fluidraum 68 über den Unfiltrateinlass 8 ausgeblasen werden. Die so praktisch vollständig entleerte Vorrichtung ist dadurch besonders zuverlässig gegen Gefrierschäden geschützt. Um während des Ausblasens einen Nebenstrom der Blasluft weitestgehend zu vermeiden, ist das Elementmaterial 20 des Filterelements 18 vorzugsweise mit einem Fasermaterial versehen, das im Wesentlichen luftundurchlässig ist.

## Patentansprüche

1. Filterelement, das ein sich zwischen zwei Kappenteilen (22, 24) erstreckendes Elementmaterial (20) aufweist, das sich innenumfangsseitig gegen eine fluiddurchlässige Stützeinrichtung (60) abstützt, wobei im Inneren der Stützeinrichtung (60) eine Kompensatoreinrichtung (48) angeordnet ist, **dadurch gekennzeichnet, dass** ein Kappenteil (24) einstückiger Bestandteil der Kompensatoreinrichtung (48) ist.

2. Filterelement nach Anspruch 1, **dadurch gekennzeichnet, dass** das Elementmaterial (20) das aussenumfangsseitig von einem Mantel (62) umfasst ist und aus einem Hohlzylinder gebildet ist, dass das eine Kappenteil (22) einstückiger Bestandteil des Mantels (62) und das andere Kappenteil (24) einstückiger Bestandteil der Kompensatoreinrichtung (48) ist, die mit einem dünnwandigen Hohlkörper die Stützeinrichtung in Form eines Stützrohres (60) durchgreift sowie mit seinem freien Ende (52) unter Bildung mindestens einer weiteren Fluiddurchlassstelle (50, 56) das obere Kappenteil durchgreift.

3. Filtervorrichtung, mit einem in einem Filtergehäuse aufgenommenen Filterelement (18) gemäß Anspruch 1 oder 2, in dessen Innenraum eine Kompensatoreinrichtung (48) aufgenommen ist, **dadurch gekennzeichnet, dass** das Filterelement (18) außenumfangsseitig und mit einem vorgebbaren radialen Abstand unter Bildung eines Fluidraums (66) von dem Mantel (62) umgeben ist, der wiederum mit einem vorgebbaren radialen Abstand unter Bildung eines weiteren Fluidraums (68) von dem Filtergehäuse (2) umgeben ist, und dass die beiden Fluidräume (66, 68) in Form kommunizierender Röhren fluidführend miteinander verbunden sind.

4. Filtervorrichtung nach Anspruch 3, **dadurch gekennzeichnet, dass** die kommunizierenden Röhren (66, 68) koaxial zur Längsachse (44) des Filterelements (18) angeordnet sind und einen zylindrischen Aufbau haben.

5. Filtervorrichtung nach Anspruch 3 oder 4, **dadurch gekennzeichnet, dass** das Filterelement (18) das sich zwischen zwei Kappenteilen (22, 24) erstreckendes Elementmaterial (20) aufweist, dessen Unfiltrat- oder Anströmseite in den einen Fluidraum (66) ausmündet und dessen Filtrat- oder Abströmseite in Richtung der Kompensatoreinrichtung (48) weist.

6. Filtervorrichtung nach einem der Ansprüche 3 bis 5, **dadurch gekennzeichnet, dass** das Elementmaterial (20) als Hohlzylinder mit einer Vielzahl von Filterfasern ausgebildet und zumindest teilweise luftundurchlässig, vorzugsweise im Wesentlichen luftundurchlässig, besonders bevorzugt vollständig luftundurchlässig, ausgeführt ist.

7. Filtervorrichtung nach einem der Ansprüche 3 bis 6, **dadurch gekennzeichnet, dass** das eine, insbesondere obere Kappenteil (22) einstückiger Bestandteil des Mantels (62) ist.

8. Filtervorrichtung nach einem der Ansprüche 3 bis 7, **dadurch gekennzeichnet, dass** zum Herstellen der fluidführenden Verbindung zwischen den beiden kommunizierenden Röhren (66, 68) der Mantel (62) in seinem fußseitigen Bereich mindestens eine Fluid-Durchlassstelle (70) aufweist.

9. Filtervorrichtung nach einem der Ansprüche 3 bis 8, **dadurch gekennzeichnet, dass** sich an der Stützeinrichtung (60) das Elementmaterial (20) bei einer Durchströmung mit Fluid von außen nach innen abstützt.

10. Filtervorrichtung nach einem der Ansprüche 3 bis 9, **dadurch gekennzeichnet, dass** die beiden Kappenteile (22, 24) gegenüber dem Filtergehäuse (2) mittels einer Dichteinrichtung (28) abgedichtet sind.

11. Filtervorrichtung nach einem der Ansprüche 3 bis 10, **dadurch gekennzeichnet, dass** die Kompensatoreinrichtung über einen dünnwandigen Hohlkörper (48), der vorzugsweise aus einem Kunststoffmaterial gebildet ist, verfügt.

12. Filtervorrichtung nach einem der Ansprüche 3 bis 11, **dadurch gekennzeichnet, dass** das obere Kappenteil (22) des Filterelements (18) unter Bildung mindestens einer weiteren Fluid-Durchlassstelle (50) von dem Hohlkörper (48) endseitig durchgriffen ist, der mit einem vorgebbaren Überstand axial über das obere Kappenteil (22) vorsteht und in diesem Bereich vom oberen Kappenteil (22) in seiner Einbaulage fixiert ist.

13. Filtervorrichtung nach einem der Ansprüche 3 bis 12, **dadurch gekennzeichnet, dass** die fluiddurchlässige Stützeinrichtung aus einem Stützrohr (60) gebildet ist, das sich zwischen den beiden Kappenteilen (22, 24) erstreckt und den Hohlkörper (48) radial umfasst.

14. Filtervorrichtung nach einem der Ansprüche 3 bis 13, **dadurch gekennzeichnet, dass** das Filtergehäuse (2) einen Einlass (8) für Unfiltrat, insbesondere in Form einer partikelverunreinigten Harnstoff-Wasser-Lösung aufweist, die, vom Elementmaterial (20) in einer Fluidrichtung von außen nach innen von den Partikeln abgereinigt, über einen Auslass (14) aus dem Filtergehäuse (2) abführbar ist, und dass in Gegenrichtung über den Auslass (14) zugeführte Luft unter zumindest teilweiser Umgehung des Elementmaterials (20) das im Filtergehäuse (2) verbliebene Unfiltrat zumindest teilweise in Richtung des Einlasses (8) des Filtergehäuses (2) ausbläst.

15. Filtervorrichtung nach einem der Ansprüche 3 bis 14, **dadurch gekennzeichnet, dass** das obere Kappenteil (22) mit einem weiteren Elementmaterial (78) versehen ist, das Partikel aus einem Luftstrom ausfiltert und auf seiner Reinseite mit dem Fluidraum (66) zwischen Mantel (62) und dem einen Elementmaterial (20) verbunden ist.

## Claims

1. Filter element which has an element material (20), which extends between two cap parts (22, 24), and is supported on the inner circumference by a fluid-permeable supporting device (60), wherein a compensator device (48) is arranged in the interior of the supporting device (60), **characterised in that** one cap part (24) is an integral component of the compensator device (48).

2. Filter element according to claim 1, **characterised in that** the element material (20) *which* is surrounded on the outer circumference by a casing (62) and is formed from a hollow cylinder, **in that** the one cap part (22) is an integral component of the casing (62) and the other cap part (24) is an integral component of the compensator device (48), which engages through the supporting device with a thin-walled hollow body in the form of a supporting tube (60) and engages through the upper cap part with its free end (52), forming at least one further fluid passage point (50, 56).

3. Filter device, having a filter element (18) according to claim 1 or 2, which is accommodated in a filter housing, and in the interior of which filter element a compensator device (48) is accommodated, **characterised in that** the filter element (18) is surrounded on the outer circumference and at a predefinable radial distance, forming a fluid chamber (66), by the casing (62), which in turn is surrounded at a predefinable radial distance, forming a further fluid chamber (68), by the filter housing (2), and **in that** the two fluid chambers (66, 68) are connected to each other in a fluid-conducting manner in the form of communicating tubes.

4. Filter device according to claim 3, **characterised in that** the communicating tubes (66, 68) are arranged coaxial with the longitudinal axis (44) of the filter element (18) and have a cylindrical structure.

5. Filter device according to claim 3 or 4, **characterised in that** the filter element (18) has the element material (20) extending between two cap parts (22, 24), the unfiltered medium or incident flow side of which opens into the one fluid chamber (66) and the filtrate or outflow side of which is directed towards the compensator device (48).

6. Filter device according to one of claims 3 to 5, **characterised in that** the element material (20) is configured as a hollow cylinder with a plurality of filter fibres and is at least partially impermeable to air, preferably substantially impermeable to air, particularly preferably completely impermeable to air.

7. Filter device according to one of claims 3 to 6, **characterised in that** the one, in particular the upper cap part (22) is an integral component of the casing (62).

8. Filter device according to one of claims 3 to 7, **characterised in that**, to establish the fluid-conducting connection between the two communicating tubes (66, 68), the casing (62) has at least one fluid passage point (70) in its base region.

9. Filter device according to one of claims 3 to 8, **characterised in that** the element material (20) is supported on the supporting device (60) when the fluid flows through said element material from outside to inside.

10. Filter device according to one of claims 3 to 9, **characterised in that** the two cap parts (22, 24) are sealed with respect to the filter housing (2) by means of a sealing device (28).

11. Filter device according to one of claims 3 to 10, **characterised in that** the compensator device has a thin-walled hollow body (48) which is preferably formed from a plastic material.

12. Filter device according to one of claims 3 to 11, **characterised in that** the upper cap part (22) of the filter element (18) is penetrated at the end by the hollow body (48), which protrudes axially beyond the upper cap part (22) with a predefinable overhang and is fixed in its installation position by the upper cap part (22) in this region, forming at least one further fluid passage point (50).

13. Filter device according to one of claims 3 to 12, **characterised in that** the fluid-permeable supporting device is formed from a supporting tube (60), which extends between the two cap parts (22, 24) and surrounds the hollow body (48) radially.

14. Filter device according to one of claims 3 to 13, **characterised in that** the filter housing (2) has an inlet (8) for unfiltered medium, in particular in the form of a particle-contaminated urea-water solution, which, cleaned of the particles by the element material (20) in a fluid direction from outside to inside, can be discharged from the filter housing (2) via an outlet (14), and **in that** air supplied in the opposite direction via the outlet (14) blows out the unfiltered medium remaining in the filter housing (2) at least partially towards the inlet (8) of the filter housing (2) while bypassing the element material (20).

15. Filter device according to one of claims 3 to 14, **characterised in that** the upper cap part (22) is provided with a further element material (78), which filters particles out of an air flow, and is connected on its clean side to the fluid chamber (66) between the casing (62) and the one element material (20).

## Revendications

1. Elément filtrant, qui a une matière (20) d'élément, qui s'étend entre deux parties (22, 24) de coiffe et qui s'appuie, du côté du pourtour intérieur, sur un dispositif (60) d'appui perméable au fluide, dans lequel un dispositif (48) compensateur est disposé à l'intérieur du dispositif (60) d'appui, **caractérisé en ce qu'**une partie (24) de coiffe est une partie constitutive monobloc du dispositif (48) compensateur.

2. Elément filtrant suivant la revendication 1, **caractérisé en ce que** la matière (20) de l'élément est entourée, du côté du pourtour extérieur, d'une chemise (62) et est formée d'un cylindre creux, **en ce que** l'une des parties (22) de coiffe est une partie constitutive monobloc de la chemise (62) et l'autre partie (24) de coiffe est une partie constitutive monobloc du dispositif (48) compensateur, lequel, par un corps creux à paroi mince, traverse le dispositif d'appui sous la forme d'un tube (60) d'appui, ainsi que, par son extrémité (52) libre, avec formation d'un autre point (50, 56) de passage de fluide, traverse la partie de coiffe supérieure.

3. Dispositif de filtration, comprenant un élément (18) filtrant suivant la revendication 1 ou 2, logé dans une enveloppe de filtre, à l'intérieur duquel est logé un dispositif (48) compensateur, **caractérisé en ce que** l'élément (18) filtrant est entouré, du côté du pourtour extérieur et à une distance radiale pouvant être donnée à l'avance, avec formation d'un espace (66) pour du fluide, de la chemise (62), qui est entourée, à son tour, à une distance radiale pouvant être donnée à l'avance, avec formation d'un autre espace (68) pour du fluide, de l'enveloppe (2) de filtre, et **en ce que** les deux espaces (66, 68) pour du fluide communiquent entre eux fluidiquement sous la forme de tubes communicants.

4. Dispositif de filtration suivant la revendication 3, **caractérisé en ce que** les tubes (66, 68) communicants sont disposés coaxialement à l'axe (44) longitudinal de l'élément (18) filtrant et ont une structure cylindrique.

5. Dispositif de filtration suivant la revendication 3 ou 4, **caractérisé en ce que** l'élément (18) filtrant a la matière (20) de l'élément s'étendant entre deux parties (22, 24) de coiffe, dont le côté de non filtrat ou d'afflux débouche dans l'un des espaces (66) pour du fluide et dont le côté de filtrat ou d'évacuation est tourné dans la direction du dispositif (48) compensateur.

6. Dispositif de filtration suivant l'une des revendications 3 à 5, **caractérisé en ce que** la matière (20) de l'élément est sous la forme d'un cylindre creux, en ayant une pluralité de fibres de filtre, et est réalisée au moins en partie de manière imperméable à l'air, de préférence sensiblement imperméable à l'air, d'une manière particulièrement préférée complètement imperméable à l'air.

7. Dispositif de filtration suivant l'une des revendications 3 à 6, **caractérisé en ce que** l'une des parties (22) de coiffe, notamment la partie supérieure est une partie constitutive monobloc de la chemise (62).

8. Dispositif de filtration suivant l'une des revendications 3 à 7, **caractérisé en ce que**, pour ménager la communication fluidique entre les deux tubes (66, 68) communicants, la chemise (62) a, dans sa partie du pied, au moins un point (70) de passage de fluide.

9. Dispositif de filtration suivant l'une des revendications 3 à 8, **caractérisé en ce que** la matière (20) de l'élément s'appuie sur le dispositif (60) d'appui, de l'extérieur vers l'intérieur, lors d'un passage de fluide.

10. Dispositif de filtration suivant l'une des revendications 3 à 9, **caractérisé en ce que** les deux parties (22, 24) de coiffe sont rendues étanches vis-à-vis de l'enveloppe (2) du filtre au moyen d'un dispositif (28) d'étanchéité.

11. Dispositif de filtration suivant l'une des revendications 3 à 10, **caractérisé en ce que** le dispositif compensateur dispose d'un corps (48) creux à paroi mince formé, de préférence en une matière plastique.

12. Dispositif de filtration suivant l'une des revendications 3 à 11, **caractérisé en ce que** la partie (22) supérieure de coiffe de l'élément (18) filtrant est, avec formation d'au moins un autre point (50) de passage de fluide, traversée du côté de l'extrémité par le corps (48) creux, qui fait saillie, d'un dépassement pouvant être donné à l'avance, axialement au-dessus de la partie (22) supérieure de coiffe, et est fixé dans cette zone dans sa position de montage par la partie (22) supérieure de coiffe.

13. Dispositif de filtration suivant l'une des revendications 3 à 12, **caractérisé en ce que** le dispositif d'appui perméable au fluide est formé d'un tube (60) d'appui, qui s'étend entre les deux parties (22, 24) de coiffe et qui entoure radialement le corps (48) creux.

14. Dispositif de filtration suivant l'une des revendications 3 à 13, **caractérisé en ce que** l'enveloppe (2) de filtre a une entrée (8) pour du non filtrat, en particulier sous la forme d'une solution d'urée-eau polluée par des particules, qui est épurée des particules dans une direction de l'extérieur vers l'intérieur par la matière (20) de l'élément, et peut être évacué de l'enveloppe (2) de filtre par une sortie (14), et **en ce que** de l'air envoyé en sens contraire par la sortie (14), en contournant au moins en partie la matière (20) de l'élément, souffle le non filtrat resté dans l'enveloppe (2) de filtre au moins en partie en direction de l'entrée (8) de l'enveloppe (2) de filtre.

15. Dispositif de filtration suivant l'une des revendications 3 à 14, **caractérisé en ce que** la partie (22) supérieure de coiffe est pourvue d'une autre matière (78) d'élément, qui sépare par filtration des particules d'un courant d'air et communique, sur son côté propre, avec l'espace (66) pour du fluide entre la chemise (62) et la une matière (20) de l'élément.
